# EUROPEAN PATENT SPECIFICATION

(11) **EP 4 454 374 B1**
(45) Date of publication and mention of the grant of the patent: **23.07.2025**
(21) Application number: 21847480.7
(22) Date of filing: 23.12.2021
(51) Int. Cl.: H04W 84/20, H04W 52/02, H04B 7/026, H04B 7/04, H04W 88/06

(54) **METHOD AND A COMMUNICATION DEVICE FOR RESOURCE SHARING**
VERFAHREN UND KOMMUNIKATIONSVORRICHTUNG ZUR GEMEINSAMEN RESSOURCENNUTZUNG
PROCÉDÉ ET DISPOSITIF DE COMMUNICATION POUR PARTAGE DE RESSOURCES

(43) Date of publication of application: 30.10.2024
(73) Proprietor: Telefonaktiebolaget LM Ericsson (publ), 164 83 Stockholm (SE)
(72) Inventor: ERICSON, Mårten, 954 33 GAMMELSTAD (SE); WÄNSTEDT, Stefan, 972 51 LULEÅ (SE); CHRISTOFFERSSON, Jan, 975 61 LULEÅ (SE)
(74) Representative: Ericsson
(86) International application number: PCT/EP2021/087531
(87) International publication number: WO 2023/117106

(56) References cited:
- US-A1- 2004 131 025
- US-B2- 6 642 887

## Description

### Technical field

The present disclosure refers to a method at a communication device for resource sharing between devices, and a communication device adapted for resource sharing.

### Background

Although known cellular techniques allow for impressive transmission possibilities in general, there are situations where the capabilities of one single communication device is not sufficient for the present demand. Device to device (D2D) group communication may be a way to increase the uplink coverage and user bit rate, for example, in a future high frequency 5G network. On a high level, a group of communication devices, here referred to as User Equipment (UEs), or sensors, are D2D capable, meaning that when a UE has data to transmit it will first distribute this data to neighboring UEs belonging to the group over the D2D or over a side link (SL) connection. In a second step, the UEs in the group will cooperatively transmit the data over the cellular Uplink (UL). The cooperative transmission will increase the UL coverage, e.g., by combining the total output power of several UEs, which may be beneficial from a latency point of view, compared to if e.g. repeated transmissions for coverage, as used e.g. in LTE narrowband (NB-IoT), is applied instead. Such a D2D group communication concept is e.g. disclosed in US 10 498 361.

The 2-hop group transmission concept provides for another way of transmitting content via a group of UEs. When one UE in a group of UEs wants to transmit data through the group, it sends its data over the SL to the other UEs in the group. Thereafter a second hop is executed, where the data is sent simultaneously in a synchronized manner from all the UEs in the group over the cellular UL to the network node, via an access node, such as e.g. an eNB/gNB.

In the Downlink (DL), the network transmits data to the group, as if the group was a single UE. At least one UE in the group must be able to receive the DL data. If necessary, the DL data is relayed to the other UEs in the group via D2D. The mentioned concept is not an entirely new technique and it is also known as cooperative relaying or Virtual Antenna Array. With the introduction of the group ID in the cellular radio area, there is no need for an extra radio chain. Furthermore, all UEs in the group are not required to have UL coverage. Instead, it is sufficient that only one of the UEs in the group have UL/DL cellular coverage.

Cooperative transmission is a technique where communication devices can cooperate to increase coverage and capacity. The technique however requires rather advanced schemes for signaling and negotiation between devices to enable efficient operation.

With respect to the Internet of Things (IoT) market, there is really no limit to the number of devices needed, and the features that they may provide, since new use cases are discovered every day. Since Rel-13 in 3GPP, IoT devices for sensors have been designed to be less complex and thus also less expensive, resulting in that the capability of many types of IoT devices has been reduced compared to older devices. The reduction in capability usually involves changes of various kinds, including e.g. fewer antennas, narrower bandwidth, lower output power. Effects on performance from such devices will typically be less coverage and lower maximum bitrate. A common remedy, for coverage enhancements, is to introduce repeated transmissions until the receiving side has acknowledged receipt of all data. Repetitions will however add latency and use more resources, both in the form of increased power consumption for the device, but also as interference in the cell. If the amount of data and the occurrence of this is not very frequent, e.g. only every day or so, this may not be a big problem. However, if the reduced capability devices suddenly need to transmit considerably more data than usual and/or with much higher bit rate, this is a problem that this type of devices cannot handle.

In order to be able to build such IoT devices at the lowest possible cost there should be as few options as possible for the different IoT devices, where each IoT device is tailored to accomplish a specific, often relatively limited and simple task, but nothing more. From a retailers point of view it would be advantageous if the number of types of IoT devices could be kept as low as possible. Unfortunately, even though a certain IoT device typically may be able to operate also with very low capabilities, there are many different possible use cases which my occasionally arise for IoT devices, where such an inflexible configuration is undesired.

In a typical scenario, a specific IoT device type is provided with a sensor that only occasionally sends a small amount of data, thereby allowing the IoT device to sleep for long time periods, between active periods in order to save power. The term "sleep" in this context means that the device does not transmit or receive any data and that it thereby can reduce its power consumption considerably, compared to if it would be active all the time. Typically, there is also a requirement that data transmitted by IoT devices is not delay sensitive, since the coverage enhancements are often built so that the IoT devices repeat the transmission until the data is finally received by the relevant access node. In the worst case, this can lead to that thousands of repetitions are required until data has been transmitted successfully.

To enable 5G to be used for services with more relaxed performance requirements and capabilities, a new UE type with low complexity is introduced in Release 17. This reduced capability (RedCap) UE type is particularly suited for machine type communication (MTC), e.g. wireless sensors or video surveillance, but it can also be used for mobile broadband (MBB) services with lower performance requirements, such as services on wearables. This low complexity UE has reduced capabilities compared to a Release 15 NR UE, e.g. in the form of reduced bandwidth; reduced number of RX/TX antennas; half duplex FDD, relaxed processing time and relaxed processing capability. The process of simplifying devices in this way, i.e. by reducing the cost of sensor devices, will likely continue in coming 3GPP releases. By way of example, discussions on how to simplify devices are ongoing is early 6G projects.

In Rel-13, Long Term Evolution for Machines (LTE-M) introduced lower complexity Machine Type Communication (MTC) devices for LTE, referred to as UE category M devices. Unlike for RedCap, this type of devices is targeting a low-power wide-area (LPWA) use case for which coverage extension is required to reach, e.g., sensors in basements, which may require 20 dB coverage and support for up to 164 dB maximum coupling loss (MCL). Several companies want to ensure that RedCap can be differentiated from Low Power Wide Area (LPWA) network use cases, since both LTE-M and Narrow Band IoT (NB-IoT) already target this use case.

The coverage enhancements of LTE-M, and NB-IoT, which were also introduced in Rel-13, rely on time for repetition, relaxed acquisition time, and lower data rates for physical channels (some physical channels are also omitted). For these enhancements to be useful, UEs must also effectively "see" a larger cell when selecting the cell to camp on. That is, enhancements are also required for the cell selection procedure. If not, there is little point in supporting as many as 2048 repetitions on PDSCH if UEs will only select the cell when in normal coverage.

To accomplish a low price and long battery lifetime, some typical radio features must be strongly reduced or even removed. Such features may affect e.g., coverage and mobility, and in a worst case scenario also limit the usability. For example, in order to reduce cost and complexity, communication devices with reduced capability often have only one antenna instead of 2 or more.

One way to increase coverage and possible bitrate, is to use the previously described approach of cooperative transmissions. However, cooperative transmissions require extensive signaling, processing and coordination and is not always suitable for very simple devices. Furthermore, it cannot always utilize the theoretical gains possible with e.g., the number of antennas available in a group of UEs, due to SL latency and losses, as well as unknown antenna configurations and/or varying antenna directions.

Since there are many potential use cases it may be so that a company deploying a sensor network needs to deploy many different types of devices to ensure coverage so that the requested service can be provided more or less everywhere. Having different IoT devices for different use cases makes deployment of sensors more complicated, since the operator needs to handle and maintain different types of devices. Further, the manufacturing becomes more expensive, since building different types of devices is more complex than building only one or a few types of devices.

US 2004/131025 A1 discloses a method where either a group of already connected users needs to approve that either: a Virtual Antenna Array (VAA) is required; a system to which the users are connected is saturated or is about to become saturated, or the interference situation of the system calls for resource sharing via a VAA. The method is triggered once there is a demand for resource sharing, rather then already when devices connect to each other.

US 6 642 887 B2 discloses cellphones which poll nearby phones for unused antenna resources, for the purpose of combined usage. However, no information on how and when the poll for unused antenna resources is being stated has been disclosed.

### Summary

It is an object of the present invention to address at least some of the deficiencies mentioned above.

According to one aspect, a method at a first communication device for sharing resources with a second communication device is suggested. The method comprises determining, in response to having determined that the two communication devices are electronically connected to each other, that the two communication devices are capable of sharing at least one physical resource with each other; initiating, in response to having determined that there is a need to share available resources between the communication devices, an exchange of device specific data relevant for the needed at least one physical resource sharing between the two communication devices, and sharing the at least one physical resource between the communication devices.

According to another aspect, a method at a second communication device for sharing resources with a first communication device is suggested. The method comprising determining, in response to having determined that the two communication devices have been electronically connected to each other, that the two communication devices are capable of sharing at least one available physical resource with each other; exchanging, in response to having been notified that there is a need to share available resources between the communication devices, device specific data relevant for the needed resource sharing between the two communication devices, and sharing at least one resource between the communication devices.

According to another aspect, a first communication device is suggested for sharing resources with a second communication device, the first communication device being configured to: determine, in response to having determined that the two communication devices are electronically connected to each other, that the two communication devices are capable of sharing at least one physical resource with each other; initiate, in response to having determined that there is a need to share available resources between the communication devices, an exchange of device specific data relevant for the needed at least one physical resource sharing between the two communication devices; and share the at least one physical resource between the communication devices.

According to yet another aspect, a second communication device is suggested for sharing resources with a first communication device, the second communication device being configured to: determine, in response to having determined that the two communication devices have been electronically connected to each other, that the two communication devices are capable of sharing at least one available physical resource with each other; exchange, in response to having been notified that there is a need to share available resources between the communication devices, device specific data relevant for the needed resource sharing between the two communication devices, and share at least one resource between the communication devices.

### Brief description of drawings

Embodiments will now be described in more detail in relation to the accompanying drawings, in which:
Figure 1a is illustrating electronically connected user devices, capable of sharing physical resources between the devices, according to one embodiment.
Figure 1b is illustrating electronically connected user devices, capable of sharing physical resources between the devices, according to another embodiment.
Figure 2 is a block scheme, illustrating two electronically connected communication devices, according to one embodiment.
Figure 3a is a block scheme, illustrating possible interior connections of two electronically connected communication devices, according to one embodiment.
Figure 3b is a block scheme, illustrating possible interior connections of three electronically connected communication devices, according to one embodiment.
Figure 4 is a signalling scheme, illustrating two communication devices, engaged in a process for sharing one or more physical resources, when involving two communication devices.
Figure 5 is another signalling scheme, illustrating three communication devices, engaged in a process for sharing one or more physical resources.
Figure 6 is a flow chart, illustrating a method executable at a communication device for sharing one or more physical resources, according to one embodiment.
Figure 7 is a flow chart, illustrating a method executable at a communication device for sharing one or more physical resources, according to another embodiment.
Figure 8a is a block scheme, illustrating a communication device, capable of acting as a master, according to one embodiment.
Figure 8b is a block scheme, illustrating a communication device, capable of acting as a master, according to another embodiment.
Figure 9a is a block scheme, illustrating a communication device, capable of interacting with a communication device, acting as a master, according to one embodiment.

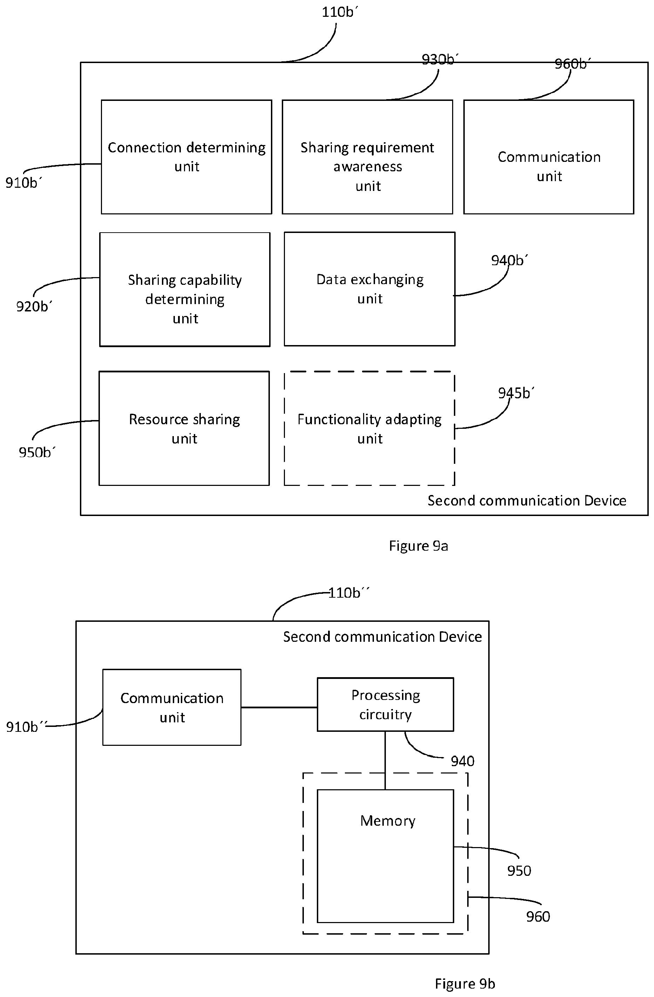

Figure 9a is a block scheme, illustrating a communication device, capable of interacting with a communication device, acting as a master, according to another embodiment.

### Detailed description

In order to, at least to some extent, remedy the problems mentioned above, a new technical solution is suggested, which allows a communication device with limited or reduced capacity, or with a temporary highly increased processing and/or transmission demand, to temporary share one or more physical resources with one or more other communication devices. The suggested technical solution provides both for a simple and automated initiation of the suggested sharing process, as well as a simple, automated process for termination of the same, once the temporary raised requirements are no longer relevant. A typical scenario may be to have to handle a temporarily raised transmission and reception demand, by temporarily acquiring an increased antenna capacity.

A cheap and simple mobile communication device, comprising a plurality of sensors may e.g. be able to handle its requirements to capture data via its sensors and transmit the captured data while roaming in an environment, whereas transmission capacity may be found not to be sufficient when, occasionally, the device need to roam in e.g. an indoor, basement environment. In such a scenario, a temporary, increased transmission capacity may be required, where the device can easily go back to its normal transmission capacity once the device has left the indoor environment and is back in its normal environment.

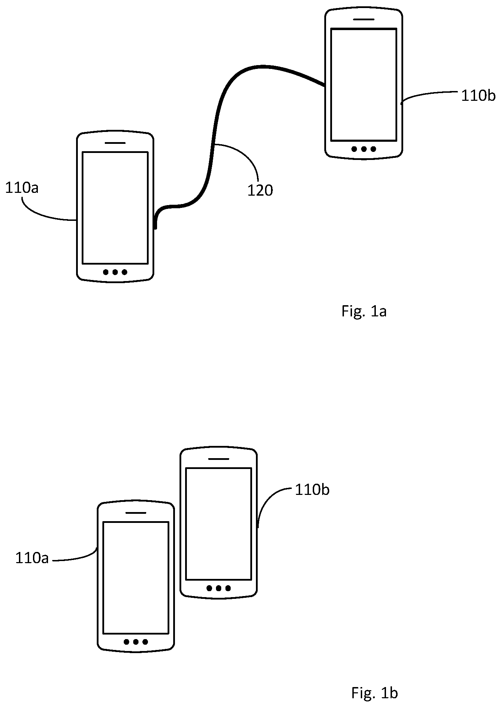

According to one embodiment two communication devices are manually connectable by connecting them together, via a male connector of one of the devices and a and corresponding female connector of the other devices, as illustrated in Fig 1a. The connectors may be configured according to, or similar to, e.g. an USB or RS-232 serial port. The figure is illustrating how the two devices 110a and 110b are connected via a wire 120, but alternatively, the two devices 110a,110b may instead be adapted so that they can be directly connected to each other via a male connector of one of the devices 110a and a female connector on the other device 110b. When the mentioned embodiment is applied it will be the fact that the two devices are considered to be connected or snapped together via the mentioned connectors, that triggers the suggested, automated resource sharing process to be initiated and executed.

Once the two devices have recognized that they have been connected, they will automatically determine whether they are capable of sharing resources with each other. Once sharing capabilities have been determined by both devices, i.e. that they both can apply the method or process as described herein for sharing resources, they will determine if there is actually a demand for resource sharing, and in case this is also a fact, the communication devices will exchange certain device specific data between each other, so that each device becomes aware of data on the other device that will be required for being able to execute the wanted resource sharing.

Transmission resources are one type of resources which may be shared when the process described herein is executed. An antenna connector is a radio frequency connector that is located at the termination of an antenna. Its attachment to the antenna provides a conduit for the transmission of radio frequency signals with signal loss, discontinuity, and impedance mismatches kept to a strict minimum. An antenna connector should maintain the electrical conditions for the transmitted current to travel under shielded conditions to an attached antenna cable, circuit board, or radio.

The connection provided by the connector at the base of an antenna not only provides an electrical connection but also a mechanical one. In many antennas, the connector is the single point at which the antenna is secured to the radio frequency device or assembly and therefore it needs to be capable of withstanding mechanical stresses and may undergo frequent mating cycles with a complementary coaxial connector on cables, power amplifiers, adapters, or PCBs. There is a wide range of antenna connectors available on the market, which vary both by physical and electrical profile.

The mechanical and structural properties of antenna connectors are important. Depending on how the antenna is mounted to a communication device, a connector may be part of a hinged, rotating, or recessed arrangement within the antenna. The size and caliber of an antenna connector often determine how the antenna will be embedded in or installed on a device, which is important e.g. if space is a concern. Mechanical failure or inability to properly mount the antenna may also render the whole unit inoperable.

In 4G and 5G, devices with reduced capability have been standardized, e.g. as narrowband LTE-M and NB-IoT. One possible use case for these devices is for example sensors, which typically send a small amount of data very seldom. This type of devices are typically supposed to have a lifetime of several years without having to replace the battery. Thus, these reduced capability devices are built to be cheap, to have a very long battery lifetime and, in spite of the reduced capacity, reasonably good coverage, but are on the other hand very inflexible if suddenly the transmission demand would change.

According to one example, a person responsible for support and maintenance in e.g. a construction plant or a security guard, inspecting the premises of the construction plant, may recognize that an IoT device, out of a large number of IoT devices, has a demand for resource sharing, e.g. by noticing a visual or audible indication from the IoT device. Alternatively, devices may be connected according to a certain time interval as a precaution, i.e. a device is manually connected once a week, in order to handle any resource sharing demand that may have been raised since the last connection. The latter alternative is more suitable in situations where relatively few IoT devices are to be handled. According to yet another embodiment, failure to receive expected data may trigger execution of the suggested method.

According to another embodiment, the electronic connection between devices may instead be achieved wirelessly, as illustrated in Fig. 1b, so that, in case two communication devices are in close vicinity of each other, they both automatically initiate the process mentioned above via a radio communications protocol, such as e.g. Sidelink, Near Field Communication (NFC) or Bluetooth. Consequently, it will be the fact that the two devices 110a,110b are sufficiently close to each other for the applied radio interface to establish communication between the devices, which triggers execution of the suggested resource sharing process, without requiring any specific physical connectors. The latter example is suitable for handling an automated scenario, where e.g. an Unmanned Aerial Vehicle (UAV) is approaching devices, which can be in the amount of hundreds or even thousands of devices, where the UAV can approach and connect to the devices wirelessly, one by one, where only those connections where a resource sharing process is actually needed will need to proceed to any actual resource sharing. According to one example, a UAV may approach a massive number of distributed IoT devices, enabling IoT devices which has a resource sharing requirement to temporary and automatically use resources of the UAV, once the UAV is in close proximity of an IoT device, and once such a use for extra resources is needed, whereas an initiated resource sharing process is terminated when the demand no longer exist or when the UAV move away from the IoT device to the next IoT device, i.e. when it is no longer in close proximity of the IoT device.

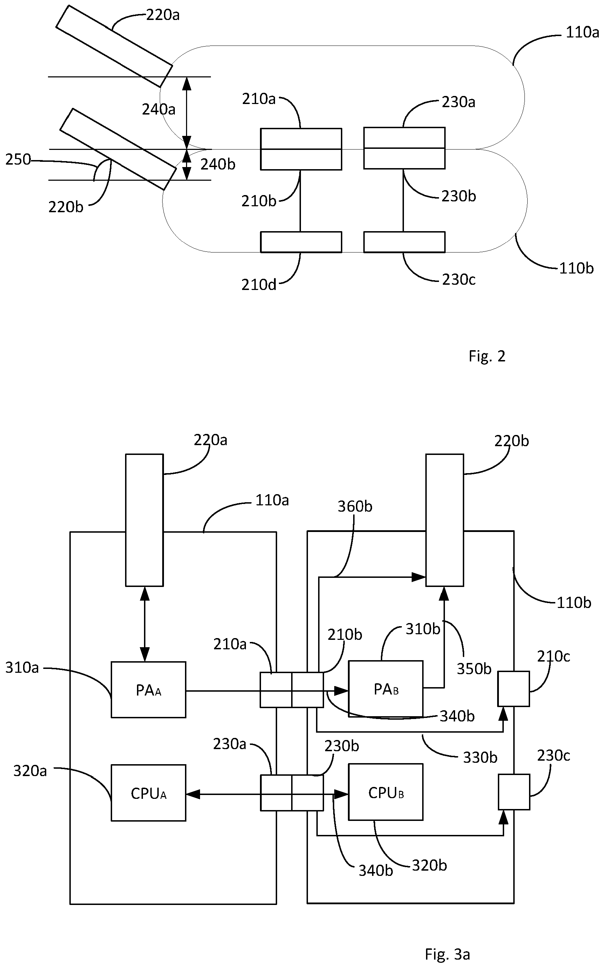

Fig. 2 is illustrating two communication devices 110a,110b, such as e.g. two IoT devices, which have been snapped together via a male signalling connector 210a and a female signalling connector 210b, adapted to enable the mentioned signalling between the two devices 110a,110b. Data exchange between the devices, via the connectors 210a,210b, is executed via a predefined protocol, such as e.g. simple Ethernet, or Profinet.

Depending on the one or more resources to be shared, also resource dependent connectors may be applied during the resource sharing. **In** the given example, it is assumed that an antenna 220a is to be shared so that e.g. communication device 110b can use its own antenna 220b and the antenna 220a of communication device 110a at the same time, or only the antenna 220a of communication device 110a, in case its own antenna is malfunctioning or not suitable for a certain transmission. In such a scenario, also a male antenna connector 230a and a female antenna connector 230b may be connected so that the antennas can operate in cooperation via those connectors during transmission and/or reception of data. It is to be understood that, signalling connection and antenna connection may be arranged within the same connector, or as separate connectors, in case the communication devices 110a,110b, comprise also antenna connections to be applied for resource sharing.

In case of an antenna sharing scenario, device specific data, exchanged between the devices 110a,110b, may typically comprise at least data on the distance 240a, 240b between the respective antennas and the surface of the respective device, as well as the angle 250 of one of the antennas 220b, so that this data can be used during antenna sharing, especially if the antennas are to be used in combination. As indicated in Fig. 2, one or both devices may comprise an additional signalling connector 210d or a pair of connectors 210c,210d, so that the devices can be connected in cascade and share resources between more than two devices. If the connectors are arranged so that devices 110a,110b can be snapped together without any wire, the connectors are typically arranged on opposite side of the device 110b. In case devices are instead connected via a wire, such connectors can be arranged more freely on the device.

If required, in a scenario where e.g. the communication device 110a is going to share antenna with communication device 110b, certain functionality, such as e.g. transmission functionality of communication device 110b, may be inactivated, and remain inactivated during the sharing. In other scenarios, relevant functionality may switch mode, e.g. by switching from normal to sleeping mode, thereby concentrating operation of the device to the resource sharing process.

Fig. 3a is a simplified illustration of two communication devices 110a,110b, which are connected to each other via signalling connectors 210a, 210b and antenna connectors 230a, 230b for the purpose of allowing one of the communication devices 110a to share an antenna 220b of the other communication device110b . As a prerequisite, the two communication devices 110a,110b have connected, exchanged relevant data and determined that one of the communication devices 110a need to share the antenna with the other communication device 110b. In the given example a CPU of the first communication device 110a, here referred to as CPU_{A} 320a is communicating with a corresponding CPU of the second communication device 220b, here referred to as CPU_{B} 320b, via connectors 340a,340b. As indicated in the figure, in case yet another device would be connected to the second communication device 110b, CPU_{A} 320a could have exchanged signalling via connectors 230a,230b and 230c, e.g. for determining that resource sharing is required and for preparing for such a process, as described herein.

Once a sharing process of an antenna is initiated, a power amplifier, PA_{A} 310a will enable the first communication device 110a, to connect to the antenna 220b of the second communication device 110b, either in addition to or as an alternative to the antenna 220a of the first communication device 110a, via antenna connectors 210a,210b. Also a third antenna (not shown) may be connected via connector 210c and connection 330b. In the present example it is assumed that the first communication device 110a, is using antenna 220b. According to a first embodiment, this can be done by also making use of power amplifier PA_{B} 310b of the second communication device 110b, wherein data to be transmitted via antenna 220b is transmitted by PA_{A} 310a via connections 340b,350b.

According to another embodiment, PA_{A} 310a does not make use of PA_{B} 310b, i.e. only the antenna 220b is shared, and in such a scenario PA_{A} 310a can therefore transmit data via antenna 220b, directly via connection 360b, without having to involve PA_{B} 310b.

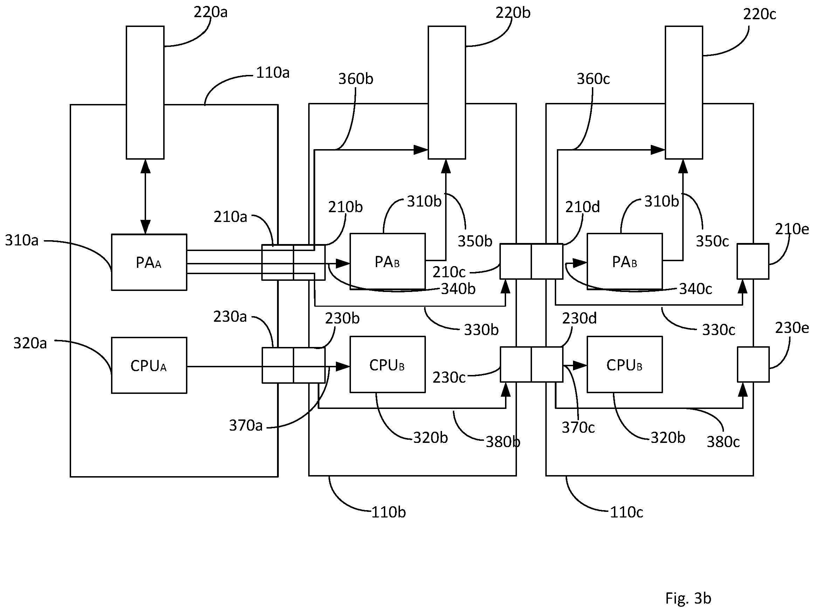

Fig. 3b is another illustration, exemplifying how, according to another embodiment, three communication devices 110a,110b,110c can be connected together for resource sharing. In the given example, data transmitted between the first communication device 110a and the third communication device 110c, is tunnelled through the second communication device through connection 380b, thereby allowing the first communication device 110a to communicate and share resources with one or both of the second and the third communication device 110b, 110c.

According to this example, the first communication device 110a, will be able to communicate with both the second 110b and the third communication device 110c, wherein it can communicate with both these communication devices 110b,110c via separate connections 330b, 340b, 360b. The number of separate connectors arranged in a device, will naturally limit the number of communication devices which can be connected together, allowing for separate connections to each connected communication device.

In the embodiments mentioned above, with reference to Fig3a and 3ab, one of the communication devices will act as master, thereby being the communication device, controlling the resource sharing process. In the given examples the first communication device 110a is assumed to be acting as a master, controlling the signalling and resource sharing with the other communication devices. The master determines which resources to share and how to share them. In addition, it will typically be the master that determines that a resource or function of a communication device shall be adapted for an upcoming resource sharing, e.g. by instructing a resource or function to go into sleep mode. The master may also determine which approach to apply, i.e. whether resource sharing shall be done, involving a plurality of communication devices or one communication device, in case it determines that one communication device, capable of sharing resources, will not be able to provide required resources.

Although it is also the communication device acting as a master that is using resources of the other communication devices in the examples presented above, a master is not necessarily the device which is using one or more resource of another device. According to an alternative embodiment, the master therefore controls a load sharing process, while instead allowing another connected communication device to share at least one resource.

There will always be one single communication device out of a group of mutually connected communication devices, acting as a master during resource sharing, i.e. the device controlling the sharing process. However, the appointment of master may be done in various ways and at different occasions in the process. Which device that shall act as a master may be predetermined or determined in a dynamic basis. One device may, according to one embodiment, be allocated as a permanent master for a group of devices, so that, each time that device is connected to one or more other devices belonging to the same group that device will become a master. A communication device may have a SIM card or a CPU, comprising information stating that the communication device is operating as a permanent master, or a certain subscription may appoint a certain communication device as a permanent master.

In case more than one potential masters are connected to each other at the same time, appointing of the communication device which will actually act as master may be done according to one out of a variety of possible alternative selection criteria. According to one embodiment, the potential master deice first connected to a plurality of devices is appointed master. According to another embodiment, the device having the highest battery level is appointed master, whereas according to a third embodiment, the master is selected randomly from the potential master devices.

According to another embodiment a master is instead appointed based on instructions, acquired from another device, stored within the other device itself, wherein the instructions may be prestored, or generated according to the present circumstances, i.e. based on available knowledge on the upcoming resource sharing and the devices involved in the load sharing process.

According to yet another embodiment various data may be considered when appointing a master, such that a master may be appointed based on e.g. at least parts of the exchanged device specific data, wherein the appointment of master will depend on the connected devices on a case-by-case basis. A decision may, alternatively be based on hard coded data of a respective device, the outcome of execution of a specific application, or on content stored in a data storage.

From the alternative embodiments for appointing a master, as mentioned above, it is obvious that an appointment of a master can be executed at any stage of the mentioned process, as long as there is a master appointed when the resource sharing starts, and that one of the connected devices is capable of acting as a permanent master.

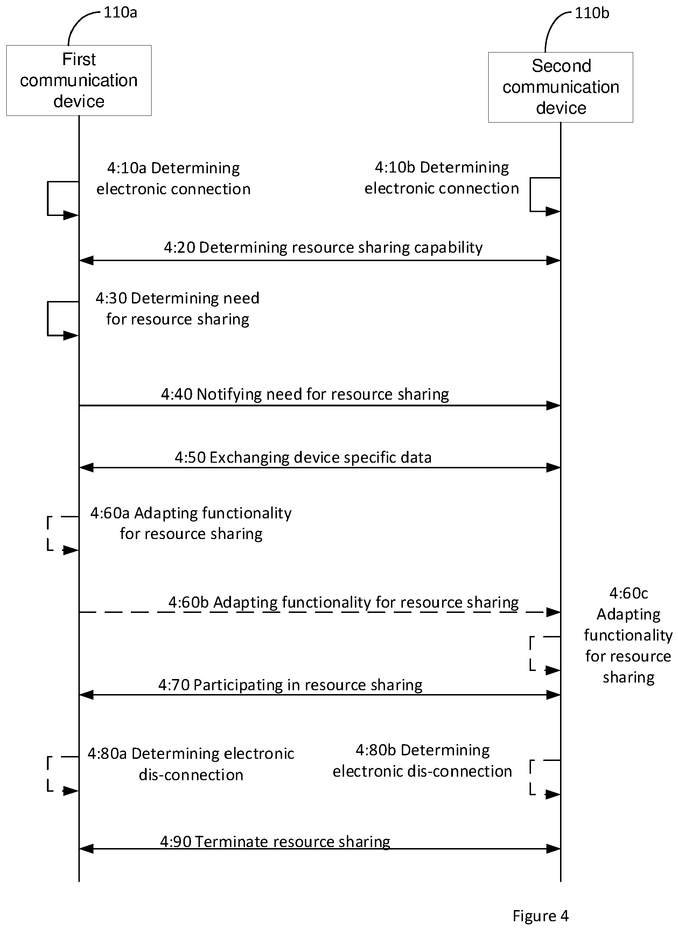

A resource sharing method as suggested herein will now be described in further detail according to the signalling scheme of Fig. 4, which is illustrating a resource sharing process between a first communication device 110a and a second communication device 110b. In initial steps 4:10a, 4:10b, both communication devices, independently of each other, determines electronic connection, i.e. that the devices have been physically or wirelessly connected to each other according to any of the embodiments described above. This may be achieved e.g. by a CPU of the respective communication device recognizing a change in voltage of its respective communication functionality.

Both devices react to this determination by engaging in a signalling process for determining if the two devices are capable of sharing resources, as indicated with step 4:20 and, thus, if the suggested response sharing process shall be continued, if the devices are capable of sharing resources, or terminated, if at least one of them are not capable of sharing resources. If both devices come to the conclusion that they are resource sharing capable, the resource sharing process proceeds if at least one of the devices also determines that load sharing is required. Such a determination can be based either on the fact that a device has an immediate resource sharing demand, or it can be estimated that an upcoming demand for resource sharing is expected. In the present example, the first communication device determines a resource sharing demand or need in another step 4:30, and, consequently, it informs the second communication device of the demand in another step 4:40.

Although not shown in the figure, the process can be terminated at this stage, in case the second communication device responds to the first communication devices that it cannot meet with the requirements, e.g. due to insufficient resources itself. However, in the present example, sharing is accepted and both devices proceed with the mentioned process by exchanging respective device specific data with the other device, as indicated with step 4:50. Once relevant device specific data has been exchanged between the devices, the devices will typically be ready for sharing one or more relevant resources, but prior to resource sharing, relevant functionality of one or both devices may be adapted, in order to prepare the devices for the upcoming resource sharing.

Such adaptation may e.g. comprise temporary interruption of data transmission from one of the devices, so that e.g. an antenna can be shared by another device without having to considering conflicting interests. Functionality of one of the devices, may, according to another embodiment, switch mode, e.g. by going into sleep mode, thereby saving other, related resources during resource sharing.

As indicated with optional step 4:60a of Fig. 4, the first communication device may determine that certain adaptations are required at the first communication device. Alternatively, or in addition, the first communication device may instruct the second communication device to adapt functionality of that device, as indicated with optional step 4:60b. The latter communication may also comprise information of adaptation of functionality, executes at the first communication device, in case such information is required at the second communication device. As indicated with step 4:60c, also the second communication device may determine that functionality of that device shall be adapted accordingly.

As indicated with step 4:70, the communication devices can participate in resource sharing once relevant device specific data has been exchanged and, whenever applicable, once required functionality has been adapted accordingly. If a master has not already been appointed, a master needs to be appointed at this stage, whereas, in case it is only the master that can use a shared resource, a master naturally needs to have been appointed already when step 4:30 is executed. In the given example, it is assumed that a master has been appointed already when the described process starts.

The initiated resource sharing will commence either until none of the devices require any resource sharing any longer (not shown), or until electronic disconnection is determined between the devices, as indicated with steps 4:80a and 4:80b, illustrating this type of determination which is executed independently of each other in the two devices, when the process is terminated, as indicated with final step 4:90. An advantage with this step is that a resource sharing process can be terminated just as easily as it was initiated, thereby requiring no or very low technical knowledge to manually handling such a resource sharing process.

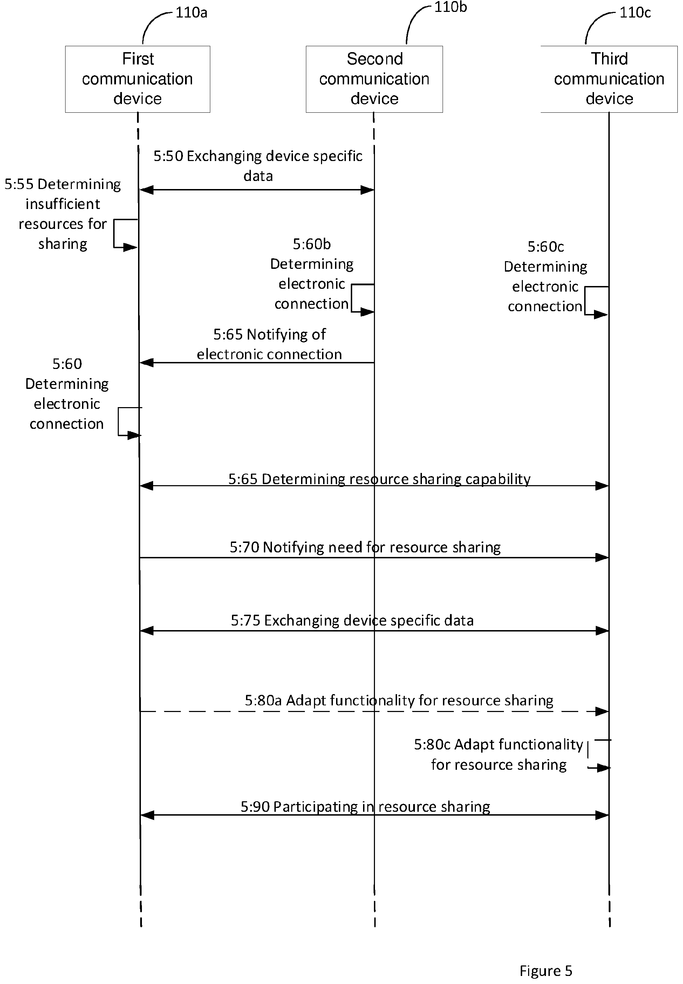

Fig. 5 is illustrating another signaling scheme, where three communication devices are involved in a resource sharing process. As a prerequisite it is assumed that steps 4:10-4:40 of Fig. 4 have been executed, and that these steps are followed by step 5:50 of Fig. 5, where device specific data is exchanged between the first communication device 110a and the second communication device 110b. At this stage one of the first and the second communication device determines that the resources available for sharing are insufficient, and thus, that exchanging of resources is required. In the present example, this is determined by the first communication device in step 5:55, which typically but not necessarily will act as a master at this stage.

In a subsequent step, a third communication device is determining electronic connection with the second communication in step 5:60c, and, correspondingly, the second communication device is determining electronic connection with the third communication device in step 5:60b. In a next step 5:65, the second communication device notifies the first communication device that it has connected electronically with another communication device, and in a subsequent step, 5:70, the first communication device is determining that there is another communication device, here the third communication device 110c, available that potentially can participate in a resource sharing process.

**In** order to determining if the third communication device can participate in the resource sharing process, resource sharing capability is determined between the first and the third communication devices, as indicated with step 4:75. From this step on, the communication between the first and the third communication device is typically executed via the second communication device. **In** a subsequent step 4:80, the first communication device is notifying its need of resource sharing, after which device specific data is exchanged between the first and the third communication devise, as indicated with step 4:85.

Next, one or all of the communication devices involved in the resource sharing process may adapt functionality for resource sharing. **In** Fig. 4 this is illustrated by the first communication device, assumingly acting as a master, instructing the third communication to adapt functionality accordingly, as indicated with optional step 4:90a, after which such adaptations are executed by the third communication device, as indicated with another optional step 4:90c. Once required adaptations have been executed, the first and the third communication device are participating in a resource sharing process, which sharing process can be with or without participation of the second communication device, which thereby may participate in the resource sharing or only act as intermediary device, via which signaling can be executed between the first and the third communication device.

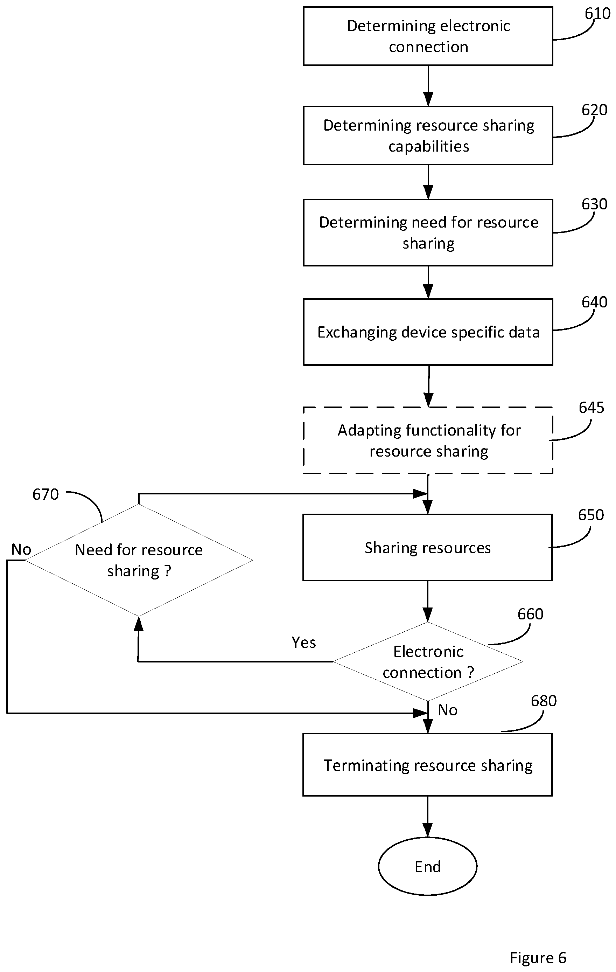

A resource sharing method, executed in a communication device which determines that a resource sharing is required, i.e. a device acting as a master, will now be described in further detail with reference to the flow chart of Fig. 6.

**In** a first step 610, the communication device determines electronic connection with another communication device, after which it determines that the two devices have resource sharing capabilities in another step 620. **In** another step 630 the communication device is determining a need for resource sharing, and in a further step 640, it is exchanging device specific data with the other communication device. **In** optional step 645, adaptation of functionality of at least one of the communication devices that need adaptation for the resource sharing is initiated accordingly. More specifically, if it is determined that the communication devices cannot share resources without having to do any adaptation of any of the functionality of any of the communication devices, the communication device instructs functionality of its own device to adapt accordingly, or it instructs relevant functionality of the other communication device to adapt accordingly. Such adaptation, may e.g. comprise instructing a communication device to go into power saving mode.

. The sharing can be terminated, as indicated with step 680, once it is determined that there is no longer any electronic connection between the communication devices, as indicated with the "No" branch of step 660, whereas, in case the electronic connection commences, it is determined if there is still need for resource sharing, as indicated with step 670. As long as the need continues, this loop continues, whereas, once there is no longer a need for resource sharing, as indicated with the "No" branch of step 670, the described process is terminated.

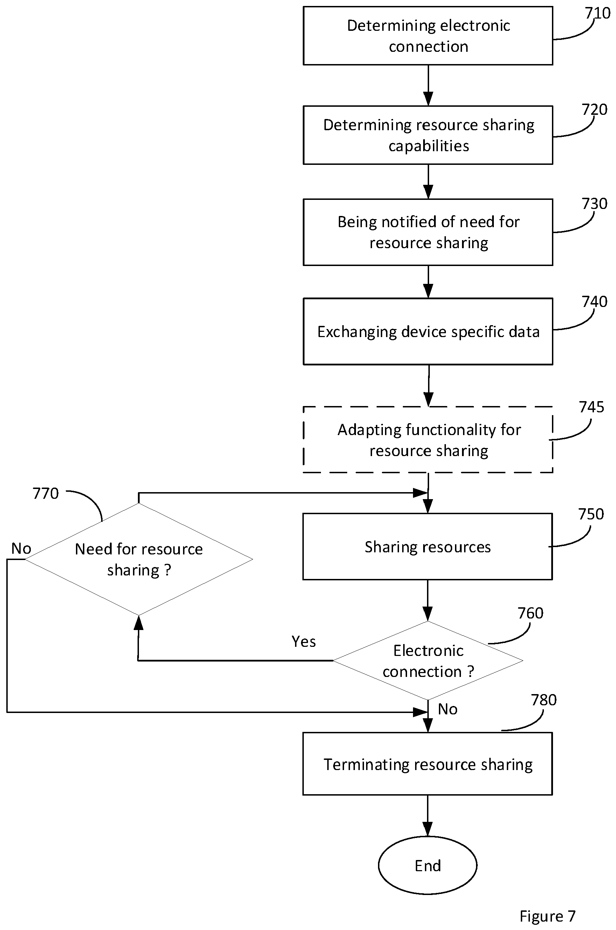

Fig. 7 is another flow chart, illustrating a method executable by a communication device, which is capable of participating in a resource sharing, but without acting as a master, i.e. a communication device which is controlled by a master during a resource sharing process. Fig, 7 is identical to Fig. 6 with the exception that in step 730, the communication device is notified of a need for resource sharing, once the other communication device, acting as a master, has determined that the is a need for resource sharing. Corresponding to step 645 of Fig. 6, the communication device may adapt functionality for resource sharing, according to optional step 745, where such adaptation may be executed by the communication device itself, or from the other communication device, acting as a master.

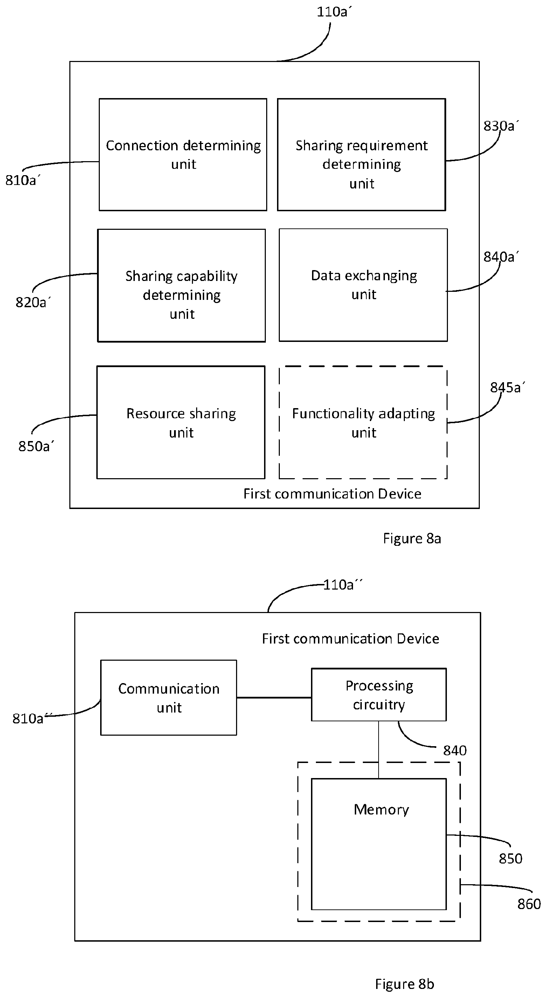

The methods described above can be executed on communication devices which have been adapted for executing one or more of the mentioned methods. A communication device, here referred to as a first communication device 110a', which is adapted to act as a master when participating in a process of sharing resources with at least one other communication device, according to one embodiment, will now be described in detail with reference to Fig. 8a, where a connection determining unit is configured to determine that this and another communication device 810a' are electronically connected to each other. The first communication device 110a' also comprise a sharing capability determining unit 820a' which is configured to determine that the two communication devices are capable of sharing at least one physical resource with each other.

A sharing requirement determining unit 830a' is configured to determine that there is a need to share available resources between the communication devices, after which a data exchanging unit 840a' is configured to initiate an exchange of device specific data, relevant for the needed, at least one, physical resource sharing between the two communication devices. The first communication device 110a' also comprises a resource sharing unit 850a', configure to share the at least one physical resource between the communication devices. at least partly based on the activated functionality, wherein sharing here means that the first communication device 110a' is using one or more physical resources of another communication device, or that another communication device is using one or more physical resources of the first communication device 110a'. The first communication device 110a' may also comprise an optional functionality adapting unit 845a', which is configured to enable functionality of the first communication device 110a' to be adapted so that are required resource sharing process can be executed. In case resource sharing can be applied without requiring any adaptation of any functionality of the first communication device 110a', the latter unit may not be required. The first communication device 110a' also comprise communication functionality, allowing the first communication device 110a' to communicate with other communication devices via any suitable interface.

A first communication device, configured to operate as suggested above, may alternatively be described according to an alternative aspect, which will now be described in further detail with reference to Fig. 5b, where the first communication device 110a" comprise processing circuitry 840 and a memory 850, where the memory 850 comprise computer readable instructions 860, which when executed by the processing circuitry 840, causes the first communication device 110a" to execute a method as described herein, i.e. to determine that the two communication devices are capable of sharing at least one available physical resource with each other, in response to having determined that the two communication devices have been electronically connected to each other; to exchange device specific data relevant for the needed resource sharing between the two communication devices, in response to having been notified that there is a need to share available resources between the communication devices, and to share at least one resource between the communication devices.

The memory 850 can be any combination of random access memory (RAM) and/or read only memory (ROM). The memory 850 also typically comprise persistent storage, which, for example, can be any single one or combination of magnetic memory, optical memory, solid-state memory or even remotely mounted memory. The processing circuitry 840 may comprise e.g. one or more central processing unit (CPU), multiprocessor or digital signal processor (DSP). The first communication device 110a" also comprises a communication unit 810a", enabling the first communication device 110a" to communicate with other communication devices, via physical connectors, or wirelessly, as described herein.

A communication device which has been adapted for executing one or more of the mentioned methods, when interacting with another communication device, acting as a master, according to any of the aspects described above, with reference to Fig. 8a and 8b, will now be described in further detail, according to one embodiment, with reference to figure 9a. The communication device, here referred to as a second communication device 110b', comprise a connection determining unit 910b', which is configured to determine that this and another communication device are electronically connected to each other. The second communication device 110b' also comprise a sharing capability determining unit 920b', which is configured to determine that the two communication devices are capable of sharing at least one physical resource with each other.

A sharing requirement determining unit 930b' is configured to recognize a notification, indicating that there is a need to share available resources between the communication devices, after which a data exchanging unit 940b' is configured to initiate an exchange of device specific data, relevant for the needed, at least one, physical resource sharing between the two communication devices. The second communication device 110b' also comprises a resource sharing unit 950b', configured to share the at least one physical resource between the communication devices, at least partly based on the activated functionality, wherein sharing here means that the second communication device 110b' is using one or more physical resources of another communication device, or that another communication device is using one or more physical resources of the second communication device 110b'.

The second communication device 110b' may also comprise an optional functionality adapting unit 945b', which is configured to enable functionality of the second communication device 110b' to be adapted so that are required resource sharing process can be executed. In case resource sharing can be applied without requiring any adaptation of any functionality of the second communication device 110b', the latter unit may not be required. The second communication device 110b' also comprise a communication unit 960b', allowing the second communication device 110b' to communicate with other communication devices via any suitable interface.

A second communication device, configured to operate as suggested above may alternatively be described according to an alternative embodiment, which will now be described in further detail with reference to Fig. 9b, where the second communication device 110b" comprise processing circuitry 940 and a memory 950, where the memory 950 comprise computer readable instructions 960, which when executed by the processing circuitry 940, causes the second communication device 110a" to execute a method or process as described herein, i.e. to determine that the two communication devices are capable of sharing at least one available physical resource with each other, in response to having determined that the two communication devices have been electronically connected to each other; to exchange device specific data relevant for the needed resource sharing between the two communication devices, in response to having been notified that there is a need to share available resources between the communication devices, and to share at least one resource between the communication devices, accordingly.

The memory 950 can be any combination of random access memory (RAM) and/or read only memory (ROM). The memory 950 also typically comprise persistent storage, which, for example, can be any single one or combination of magnetic memory, optical memory, solid-state memory or even remotely mounted memory. The processing circuitry 940 may comprise e.g. one or more central processing unit (CPU), multiprocessor or digital signal processor (DSP). The first communication device 110a" also comprises a communication unit 910a", enabling the first communication device 110a" to communicate with other communication devices, via physical connectors, or wirelessly, as described herein.

In addition to what has been mentioned in Fig 8a-9b, although not shown in the figures, the communication device 110a', 110a", 110b'and 110b" typically comprise also other functional entities, needed for being able to operate as a conventional communication device, such as e.g. a power source and a user interface, enabling a user to interact with other communication devices. For obvious reasons, the communication device also comprise resources that can be shared between communication devices.

## Claims

1. A method at a first communication device for sharing resources with a second communication device, the method comprising:
- determining (620), in response to having determined (610) that the two communication devices are electronically connected to each other, that the two communication devices are capable of sharing at least one physical resource with each other;
- initiating (640), in response to having determined (630) that there is a need to share available resources between the communication devices, an exchange of device specific data relevant for the needed at least one physical resource sharing between the two communication devices;
and
- sharing (650) the at least one physical resource between the communication devices.

2. A method at a second communication device for sharing resources with a first communication device, the method comprising:
- determining (720), in response to having determined (710) that the two communication devices have been electronically connected to each other, that the two communication devices are capable of sharing at least one available physical resource with each other;
- exchanging (740), in response to having been notified (730) that there is a need to share available resources between the communication devices, device specific data relevant for the needed resource sharing between the two communication devices, and
- sharing (750) at least one resource between the communication devices.

3. A first communication device (110a', 110a") for sharing resources with a second communication device (110b', 110b"), the first communication device (110a', 110a") being configured to:
- determine, in response to having determined that the two communication devices are electronically connected to each other, that the two communication devices are capable of sharing at least one physical resource with each other;
- initiate, in response to having determined that there is a need to share available resources between the communication devices, an exchange of device specific data relevant for the needed at least one physical resource sharing between the two communication devices;
and
- share the at least one physical resource between the communication devices.

4. The first communication device (110a', 110a") according to claim 3, wherein the first communication device (110a', 110a") is acting as a master communication device, based on instructions to act as a master communication device, wherein the instructions comprise one of:
- instructions acquired from a communication device (110b', 110b") other than the first communication device (110a', 110a");
- preconfigured instructions accessible to the first communication device (110a', 110a"), and
- instructions generated by the first communication device (110a', 110a").

5. The first communication device (110a', 110a") according to claim 4, wherein the instructions are instructing the first communication device (110a', 110a") to act as a master device based on at least one of:
- at least parts of the exchanged device specific data;
- hard coded data of the first communication device (110a', 110a");
- an application executed by the first communication device (110a', 110a"), and
- content stored in a data storage accessible to the first communication device (110a', 110a").

6. The first communication device (110a', 110a") according to any of claims 3-5, comprising the further step of
- the first communication device (110a', 110a") going into power saving mode or
- instructing the second communication device (110b', 110b") to go into power saving mode.

7. The first communication device (110a', 110a") according to any of claims 3-6, further configured to repeat the mentioned steps in response to the first communication device (110a', 110a") interacting with a third communication device (110c), and in response to determining from the exchanged device specific data, relevant for the needed resource sharing, that the resources available for sharing between the first communication device (110a', 110a") and the second communication devices (110b', 110b") are insufficient for meeting with the determined need of resource sharing.

8. The first communication device (110a', 110a") according to any of claims 3-7, further configured to terminate the sharing of the at least one physical resource, upon
- determining that said communication devices (110a', 110a", 110b',110b"), are no longer electronically connected, and
- determining that said communication devices (110a', 110a", 110b',110b") are no longer physically connected.

9. The first communication device (110a', 110a") according to any of claims 3-8, being further configured to, when determining, to determine that the communication devices (110a', 110a", 110b',110b") are capable of sharing at least one resource based on at least one of:
- determined availability of the at least one resource;
- predicted availability of the at least one resource;
- type of communication devices to share resources,
- the result of a capability signaling procedure between the communication devices (110a', 110a", 110b',110b"), and
- the result of a compatibility signaling procedure between the communication devices (110a', 110a", 110b',110b").

10. The first communication device (110a', 110a") according to any of claims 3-9, configured to exchange device specific data comprising at least one of:
- information on antenna placement;
- instructions appointing one of said communication devices to a master device;
- information on CPU resources available for sharing;
- time related information on when the one or more available resources can be shared or are estimated to be sharable;
- information on the capacity of the one or more available resources that can be shared;
- Information on further information exchange that need to be executed before a sharing of resources can be initiated;
- information on parameter settings that need to be executed before a sharing of resources can be initiated, and
- information on at least one security related procedure that need to be executed before a sharing of resources can be initiated;

11. The first communication device (110a', 110a") according to any of claims 3-10, configured to activate functionality, comprising comprises at least one of:
- scheduling resource utilization of the at least one resource to be shared between said communication devices, and
- adaptation of the mode of at least one resource which is dependent on the resource to be shared.

12. A second communication device (110b', 110b") for sharing resources with a first communication device (110a', 110a"), the second communication device (110b', 110b") being configured to:
- determine, in response to having determined that the two communication devices (110a', 110a", 110b',110b") have been electronically connected to each other, that the two communication devices (110a', 110a", 110b',110b") are capable of sharing at least one available physical resource with each other;
- exchange, in response to having been notified that there is a need to share available resources between the communication devices (110a', 110a", 110b',110b"), device specific data relevant for the needed resource sharing between the two communication devices (110a', 110a", 110b',110b"), and
- share at least one resource between the communication devices (110a', 110a", 110b',110b").

13. The second communication device (110b', 110b") according to claim 12, further configured to terminate the sharing of the at least one physical resource, upon determining one of:
- that said communication devices (110a', 110a", 110b',110b") are no longer electronically connected, and
- that said communication devices (110a', 110a", 110b',110b") are no longer physically connected.

14. The second communication device (110b', 110b") according to any of the claims 11-13, configured to repeat the mentioned executions, in response to determining that an attempt to share the at least one resource between at least the first communication device (110a', 110a") and the second communication device (110b', 110b") has failed.

15. The second communication device (110b', 110b") according to any of claims 11-14, configured to determine that the communication devices (110a', 110a", 110b', 110b") are capable of sharing at least one resource is based on at least one of:
- determined availability of the at least one resource;
- predicted availability of the at least one resource;
- type of communication devices to share resources,
- the result of a capability signaling procedure between the communication devices (110a', 110a", 110b', 110b"), and
- the result of a compatibility signaling procedure between the communication devices (110a', 110a", 110b', 110b").

16. The second communication device (110b', 110b") according to any of claims 11-15, configured to exchange device specific data comprising at least one of:
- information on antenna placement;
- instructions appointing one of said communication devices to a master device;
- information on CPU resources available for sharing;
- time related information on when the one or more available resources can be shared or are estimated to be sharable;
- information on the capacity of the one or more available resources that can be shared;
- Information on further information exchange that need to be executed before a sharing of resources can be initiated;
- information on parameter settings that need to be executed before a sharing of resources can be initiated, and
- information on at least one security related procedure that need to be executed before a sharing of resources can be initiated;

17. The second communication device (110b', 110b") according to any of claims 11-16, configured to activate functionality comprising as least one of:
- scheduling resource utilization of the at least one resource to be shared between said communication devices (110a', 110a", 110b', 110b"), and
- adaptation of the mode of at least one resource which is dependent on the resource to be shared.

## Patentansprüche

1. Verfahren an einer ersten Kommunikationsvorrichtung zur gemeinsamen Nutzung von Ressourcen mit einer zweiten Kommunikationsvorrichtung, wobei das Verfahren Folgendes umfasst:
- Bestimmen (620) in Reaktion darauf, dass bestimmt wurde (610), dass die beiden Kommunikationsvorrichtungen elektronisch miteinander verbunden sind, dass die beiden Kommunikationsvorrichtungen in der Lage sind, mindestens eine physikalische Ressource gemeinsam miteinander zu nutzen;
- Initiieren (640) in Reaktion darauf, dass bestimmt wurde (630), dass ein Bedarf an einer gemeinsamen Nutzung verfügbarer Ressourcen zwischen den Kommunikationsvorrichtungen besteht, eines Austauschs vorrichtungsspezifischer Daten, die für die erforderliche gemeinsame Nutzung mindestens einer physikalischen Ressource zwischen den beiden Kommunikationsvorrichtungen relevant sind;
und
- gemeinsames Nutzen (650) der mindestens einen physikalischen Ressource zwischen den Kommunikationsvorrichtungen.

2. Verfahren an einer zweiten Kommunikationsvorrichtung zur gemeinsamen Nutzung von Ressourcen mit einer ersten Kommunikationsvorrichtung, wobei das Verfahren Folgendes umfasst:
- Bestimmen (720) in Reaktion darauf, dass bestimmt wurde (710), dass die beiden Kommunikationsvorrichtungen elektronisch miteinander verbunden wurden, dass die beiden Kommunikationsvorrichtungen in der Lage sind, mindestens eine verfügbare physikalische Ressource gemeinsam miteinander zu nutzen;
- Austauschen (740) in Reaktion darauf, dass gemeldet wurde (730), dass ein Bedarf an einer gemeinsamen Nutzung verfügbarer Ressourcen zwischen den Kommunikationsvorrichtungen besteht, vorrichtungsspezifischer Daten, die für die erforderliche gemeinsame Ressourcennutzung zwischen den beiden Kommunikationsvorrichtungen relevant sind; und
- gemeinsames Nutzen (750) mindestens einer Ressource zwischen den Kommunikationsvorrichtungen.

3. Erste Kommunikationsvorrichtung (110a', 110a") zum gemeinsamen Nutzen von Ressourcen mit einer zweiten Kommunikationsvorrichtung (110b', 110b"), wobei die erste Kommunikationsvorrichtung (110a', 110a") zu Folgendem konfiguriert ist:
- Bestimmen in Reaktion darauf, dass bestimmt wurde, dass die beiden Kommunikationsvorrichtungen elektronisch miteinander verbunden sind, dass die beiden Kommunikationsvorrichtungen in der Lage sind, mindestens eine physikalische Ressource gemeinsam miteinander zu nutzen;
- Initiieren in Reaktion darauf, dass bestimmt wurde, dass ein Bedarf an einer gemeinsamen Nutzung verfügbarer Ressourcen zwischen den Kommunikationsvorrichtungen besteht, eines Austauschs vorrichtungsspezifischer Daten, die für die erforderliche gemeinsame Nutzung mindestens einer physikalischen Ressource zwischen den beiden Kommunikationsvorrichtungen relevant sind; und
- gemeinsamen Nutzen der mindestens einen physikalischen Ressource zwischen den Kommunikationsvorrichtungen.

4. Erste Kommunikationsvorrichtung (110a', 110a") nach Anspruch 3, wobei die erste Kommunikationsvorrichtung (110a', 110a") basierend auf Anweisungen, als eine Master-Kommunikationsvorrichtung zu fungieren, als Master-Kommunikationsvorrichtung fungiert, wobei die Anweisungen eine von folgenden umfassen:
- Anweisungen, die von einer anderen Kommunikationsvorrichtung (110b', 110b") als der ersten Kommunikationsvorrichtung (110a', 110a") beschafft werden;
- vorkonfigurierte Anweisungen, auf die die Kommunikationsvorrichtung (110a', 110a") zugreifen kann, und
- Anweisungen, die von der ersten Kommunikationsvorrichtung (110a', 110a") erzeugt werden.

5. Erste Kommunikationsvorrichtung (110a', 110a") nach Anspruch 4, wobei die Anweisungen die erste Kommunikationsvorrichtung (110a', 110a") basierend auf mindestens einem von Folgenden anweisen, als eine Master-Kommunikationsvorrichtung zu fungieren:
- zumindest Teilen der ausgetauschten vorrichtungsspezifischen Daten;
- hartcodierten Daten der ersten Kommunikationsvorrichtung (110a', 110a");
- einer Anwendung, die von der ersten Kommunikationsvorrichtung (110a', 110a") ausgeführt wird, und
- Inhalt, der in einem Datenspeicher gespeichert ist, auf den die erste Kommunikationsvorrichtung (110a', 110a") zugreifen kann.

6. Erste Kommunikationsvorrichtung (110a', 110a") nach einem der Ansprüche 3-5, umfassend den weiteren Schritt, dass
- die erste Kommunikationsvorrichtung (110a', 110a") in einen Energiesparmodus eintritt oder
- die zweite Kommunikationsvorrichtung (110b', 110b") angewiesen wird, in einen Energiesparmodus einzutreten.

7. Erste Kommunikationsvorrichtung (110a', 110a") nach einem der Ansprüche 3-6, ferner dazu konfiguriert, die erwähnten Schritte in Reaktion darauf zu wiederholen, dass die erste Kommunikationsvorrichtung (110a', 110a") mit einer dritten Kommunikationsvorrichtung (110c) interagiert, und in Reaktion darauf, dass aus den ausgetauschten vorrichtungsspezifischen Daten, die für die erforderliche gemeinsame Ressourcennutzung relevant sind, bestimmt wird, dass die zur gemeinsamen Nutzung zwischen der ersten Kommunikationsvorrichtung (110a', 110a") und der zweiten Kommunikationsvorrichtung (110b', 110b") verfügbaren Ressourcen nicht ausreichen, um den bestimmten Bedarf an gemeinsamer Ressourcennutzung zu decken.

8. Erste Kommunikationsvorrichtung (110a', 110a") nach einem der Ansprüche 3-7, ferner konfiguriert zum Beenden der gemeinsamen Nutzung der mindestens einen physikalischen Ressource bei einem von Folgendem:
- Bestimmen, dass die Kommunikationsvorrichtungen (110a', 110a", 110b', 110b") nicht mehr elektronisch verbunden sind, und
- Bestimmen, dass die Kommunikationsvorrichtungen (110a', 110a", 110b', 110b") nicht mehr physisch verbunden sind.

9. Erste Kommunikationsvorrichtung (110a', 110a") nach einem der Ansprüche 3-8, die ferner dazu konfiguriert ist, zu bestimmen, dass die Kommunikationsvorrichtungen (110a', 110a", 110b', 110b") zur gemeinsamen Nutzung mindestens einer Ressource in der Lage sind, beim Bestimmen basierend auf mindestens einem von Folgenden:
- einer bestimmten Verfügbarkeit der mindestens einen Ressource;
- einer vorhergesagten Verfügbarkeit der mindestens einen Ressource;
- einem Typ von Kommunikationsvorrichtungen zum gemeinsamen Nutzen von Ressourcen,
- dem Ergebnis einer Fähigkeitssignalisierungsprozedur zwischen den Kommunikationsvorrichtungen (110a', 110a", 110b', 110b") und
- dem Ergebnis einer Kompatibilitätssignalisierungsprozedur zwischen den Kommunikationsvorrichtungen (110a', 110a", 110b', 110b").

10. Erste Kommunikationsvorrichtung (110a', 110a") nach einem der Ansprüche 3-9, konfiguriert zum Austauschen vorrichtungsspezifischer Daten, die mindestens eines von Folgenden umfassen:
- Informationen über die Antennenplatzierung;
- Anweisungen, die eine der Kommunikationsvorrichtungen als Master-Vorrichtung festlegen;
- Informationen über CPU-Ressourcen, die zur gemeinsamen Nutzung verfügbar sind;
- zeitbezogene Informationen darüber, wann die eine oder die mehreren verfügbaren Ressourcen gemeinsam genutzt werden können oder voraussichtlich gemeinsam nutzbar sind;
- Informationen über die Kapazität der einen oder der mehreren verfügbaren Ressourcen, die gemeinsam genutzt werden können;
- Informationen über weiteren Informationsaustausch, der ausgeführt werden muss, bevor eine gemeinsame Nutzung von Ressourcen initiiert werden kann;
- Informationen über Parametereinstellungen, die ausgeführt werden müssen, bevor eine gemeinsame Nutzung von Ressourcen initiiert werden kann;
- Information über mindestens eine sicherheitsbezogene Prozedur, die ausgeführt werden muss, bevor eine gemeinsame Nutzung von Ressourcen initiiert werden kann.

11. Erste Kommunikationsvorrichtung (110a', 110a") nach einem der Ansprüche 3-10, konfiguriert zum Aktivieren von Funktionalität, die mindestens eines von Folgenden umfasst:
- Disposition von Ressourcennutzung der mindestens einen Ressource, die zwischen den Kommunikationsvorrichtungen gemeinsam genutzt werden soll; und
- Anpassung des Modus mindestens einer Ressource, der von der gemeinsam zu nutzenden Ressource abhängt.

12. Zweite Kommunikationsvorrichtung (110b', 110b") zum gemeinsamen Nutzen von Ressourcen mit einer ersten Kommunikationsvorrichtung (110a', 110a"), wobei die zweite Kommunikationsvorrichtung (110b' , 110b") zu Folgendem konfiguriert ist:
- Bestimmen in Reaktion darauf, dass bestimmt wurde, dass die beiden Kommunikationsvorrichtungen (110a', 110a", 110b', 110b") elektronisch miteinander verbunden wurden, dass die beiden Kommunikationsvorrichtungen (110a', 110a", 110b', 110b") in der Lage sind, mindestens eine physikalische Ressource gemeinsam miteinander zu nutzen;
- Austauschen in Reaktion darauf, dass gemeldet wurde, dass ein Bedarf an einer gemeinsamen Nutzung verfügbarer Ressourcen zwischen den Kommunikationsvorrichtungen (110a', 110a", 110b', 110b") besteht, vorrichtungsspezifischer Daten, die für die erforderliche gemeinsame Ressourcennutzung zwischen den beiden Kommunikationsvorrichtungen (110a', 110a", 110b', 110b") relevant sind; und
- gemeinsamen Nutzen mindestens einer Ressource zwischen den Kommunikationsvorrichtungen (110a', 110a", 110b', 110b").

13. Zweite Kommunikationsvorrichtung (110b', 110b") nach Anspruch 12, ferner konfiguriert zum Beenden der gemeinsamen Nutzung der mindestens einen physikalischen Ressource bei Bestimmen von einem dessen,
- dass die Kommunikationsvorrichtungen (110a', 110a", 110b', 110b") nicht mehr elektronisch verbunden sind, und
- dass die Kommunikationsvorrichtungen (110a', 110a", 110b', 110b") nicht mehr physisch verbunden sind.

14. Zweite Kommunikationsvorrichtung (110b', 110b") nach einem der Ansprüche 11-13, konfiguriert zum Wiederholen der erwähnten Ausführungen in Reaktion auf ein Bestimmen, dass ein Versuch zur gemeinsamen Nutzung der mindestens einen Ressource zumindest zwischen der ersten Kommunikationsvorrichtung (110a', 110a") und der zweiten Kommunikationsvorrichtung (110b', 110b") fehlgeschlagen ist.

15. Zwei Kommunikationsvorrichtung (110b', 110b") nach einem der Ansprüche 11-14, konfiguriert zum Bestimmen, dass die Kommunikationsvorrichtungen (110a', 110a", 110b', 110b") zur gemeinsamen Nutzung mindestens einer Ressource in der Lage sind, basierend auf mindestens einem von Folgenden:
- einer bestimmten Verfügbarkeit der mindestens einen Ressource;
- einer vorhergesagten Verfügbarkeit der mindestens einen Ressource;
- einem Typ von Kommunikationsvorrichtungen zum gemeinsamen Nutzen von Ressourcen,
- dem Ergebnis einer Fähigkeitssignalisierungsprozedur zwischen den Kommunikationsvorrichtungen (110a', 110a", 110b', 110b") und
- dem Ergebnis einer Kompatibilitätssignalisierungsprozedur zwischen den Kommunikationsvorrichtungen (110a', 110a", 110b', 110b").

16. Zweite Kommunikationsvorrichtung (110b', 110b") nach einem der Ansprüche 11-15, konfiguriert zum Austauschen vorrichtungsspezifischer Daten, die mindestens eines von Folgenden umfassen:
- Informationen über die Antennenplatzierung;
- Anweisungen, die eine der Kommunikationsvorrichtungen als Master-Vorrichtung festlegen;
- Informationen über CPU-Ressourcen, die zur gemeinsamen Nutzung verfügbar sind;
- zeitbezogene Informationen darüber, wann die eine oder die mehreren verfügbaren Ressourcen gemeinsam genutzt werden können oder voraussichtlich gemeinsam nutzbar sind;
- Informationen über die Kapazität der einen oder der mehreren verfügbaren Ressourcen, die gemeinsam genutzt werden können;
- Informationen über weiteren Informationsaustausch, der ausgeführt werden muss, bevor eine gemeinsame Nutzung von Ressourcen initiiert werden kann;
- Informationen über Parametereinstellungen, die ausgeführt werden müssen, bevor eine gemeinsame Nutzung von Ressourcen initiiert werden kann;
- Informationen über mindestens eine sicherheitsbezogene Prozedur, die ausgeführt werden muss, bevor eine gemeinsame Nutzung von Ressourcen initiiert werden kann.

17. Zweite Kommunikationsvorrichtung (110b', 110b") nach einem der Ansprüche 11-16, konfiguriert zum Aktivieren von Funktionalität, die mindestens eines von Folgenden umfasst:
- Disposition von Ressourcennutzung der mindestens einen Ressource, die zwischen den Kommunikationsvorrichtungen (110a', 110a", 110b', 110b") gemeinsam genutzt werden soll; und
- Anpassung des Modus mindestens einer Ressource, der von der gemeinsam zu nutzenden Ressource abhängt.

## Revendications

1. Procédé au niveau d'un premier dispositif de communication pour partager des ressources avec un deuxième dispositif de communication, le procédé comprenant :
- la détermination (620), en réponse à la détermination (610) que les deux dispositifs de communication sont connectés électroniquement l'un à l'autre, que les deux dispositifs de communication sont capables de partager au moins une ressource physique entre eux ;
- l'initiation (640), en réponse à la détermination (630) qu'il existe un besoin de partager des ressources disponibles entre les dispositifs de communication, d'un échange de données spécifiques au dispositif pertinentes pour l'au moins un partage nécessaire de ressources physiques entre les deux dispositifs de communication ;
et
- le partage (650) de l'au moins une ressource physique entre les dispositifs de communication.

2. Procédé au niveau d'un deuxième dispositif de communication pour partager des ressources avec un premier dispositif de communication, le procédé comprenant :
- la détermination (720), en réponse à la détermination (710) que les deux dispositifs de communication ont été connectés électroniquement l'un à l'autre, que les deux dispositifs de communication sont capables de partager au moins une ressource physique disponible entre eux ;
- l'échange (740), en réponse à la notification (730) qu'il existe un besoin de partager des ressources disponibles entre les dispositifs de communication, de données spécifiques au dispositif pertinentes pour le partage nécessaire de ressources entre les deux dispositifs de communication, et
- le partage (750) d'au moins une ressource entre les dispositifs de communication.

3. Premier dispositif de communication (110a', 110a") pour partager des ressources avec un deuxième dispositif de communication (110b', 110b"), le premier dispositif de communication (110a', 110a'') étant configuré pour :
- déterminer, en réponse à la détermination que les deux dispositifs de communication sont connectés électroniquement l'un à l'autre, que les deux dispositifs de communication sont capables de partager au moins une ressource physique entre eux ;
- initier, en réponse à la détermination qu'il existe un besoin de partager des ressources disponibles entre les dispositifs de communication, un échange de données spécifiques au dispositif pertinentes pour l'au moins un partage nécessaire de ressources physiques entre les deux dispositifs de communication ;
et
- partager l'au moins une ressource physique entre les dispositifs de communication.

4. Premier dispositif de communication (110a', 110a") selon la revendication 3, dans lequel le premier dispositif de communication (110a', 110a") agit comme dispositif de communication maître, sur la base d'instructions d'agir comme dispositif de communication maître, dans lequel les instructions comprennent l'une parmi :
- des instructions acquises depuis un dispositif de communication (110b', 110b") autre que le premier dispositif de communication (110a', 110a'') ;
- des instructions préconfigurées accessibles au premier dispositif de communication (110a', 110a''), et
- des instructions générées par le premier dispositif de communication (110a', 110a").

5. Premier dispositif de communication (110a', 110a") selon la revendication 4, dans lequel les instructions instruisent au premier dispositif de communication (110a', 110a'') d'agir comme dispositif maître sur la base d'au moins l'un parmi :
- au moins des parties des données spécifiques au dispositif échangées ;
- des données codées en dur du premier dispositif de communication (110a', 110a") ;
- une application exécutée par le premier dispositif de communication (110a', 110a"), et
- un contenu stocké dans un stockage de données accessible au premier dispositif de communication (110a', 110a").

6. Premier dispositif de communication (110a', 110a") selon l'une quelconque des revendications 3 à 5, comprenant en outre l'étape de :
- le passage du premier dispositif de communication (110a', 110a") dans un mode d'économie d'énergie, ou
- l'instruction au deuxième dispositif de communication (110b', 110b") de passer dans un mode d'économie d'énergie.

7. Premier dispositif de communication (110a', 110a") selon l'une quelconque des revendications 3 à 6, configuré en outre pour répéter les étapes susmentionnées en réponse au fait que le premier dispositif de communication (110a', 110a") interagit avec un troisième dispositif de communication (110c) et en réponse à la détermination, à partir des données spécifiques au dispositif échangées pertinentes pour le partage nécessaire de ressources, que les ressources disponibles pour le partage entre le premier dispositif de communication (110a', 110a") et le deuxième dispositif de communication (110b', 110b") sont insuffisantes pour répondre au besoin déterminé de partage de ressources.

8. Premier dispositif de communication (110a', 110a") selon l'une quelconque des revendications 3 à 7, configuré en outre pour terminer le partage de l'au moins une ressource physique lors de :
- la détermination que lesdits dispositifs de communication (110a', 110a", 110b', 110b") ne sont plus connectés électroniquement, et
- la détermination que lesdits dispositifs de communication (110a', 110a", 110b', 110b") ne sont plus connectés physiquement.

9. Premier dispositif de communication (110a', 110a' ) selon l'une quelconque des revendications 3 à 8, configuré en outre pour, lors de la détermination, déterminer que les dispositifs de communication (110a', 110a", 110b', 110b") sont capables de partager au moins une ressource sur la base au moins de :
- une disponibilité déterminée de l'au moins une ressource ;
- une disponibilité prédite de l'au moins une ressource ;
- un type de dispositifs de communication pour partager des ressources ;
- le résultat d'une procédure de signalisation de capacité entre les dispositifs de communication (110a', 110a'', 110b', 110b''), et
- le résultat d'une procédure de signalisation de compatibilité entre les dispositifs de communication (110a', 110a", 110b', 110b").

10. Premier dispositif de communication (110a', 110a") selon l'une quelconque des revendications 3 à 9, configuré pour échanger des données spécifiques au dispositif comprenant au moins l'une parmi :
- des informations de placement d'antenne ;
- des instructions de désignation de l'un desdits dispositifs de communication comme dispositif maître ;
- des informations sur des ressources de CPU disponibles pour le partage ;
- des informations liées au temps indiquant quand les une ou plusieurs ressources disponibles peuvent être partagées ou sont estimées comme pouvant être partagées ;
- des informations sur la capacité des une ou plusieurs ressources disponibles qui peuvent être partagées ;
- des informations sur un autre échange d'informations qui doit être exécuté avant de pouvoir initier un partage de ressources ;
- des informations sur des réglages de paramètres qui doivent être exécutés avant de pouvoir initier un partage de ressources, et
- des informations sur au moins une procédure liée à la sécurité qui doit être exécutée avant de pouvoir initier un partage de ressources.

11. Premier dispositif de communication (110a', 110a") selon l'une quelconque des revendications 3 à 10, configuré pour activer une fonctionnalité, comprenant au moins l'une parmi :
- la planification d'utilisation de ressources de l'au moins une ressource à partager entre lesdits dispositifs de communication, et
- l'adaptation du mode d'au moins une ressource qui dépend de la ressource à partager.

12. Deuxième dispositif de communication (110b', 110b'') pour partager des ressources avec un premier dispositif de communication (110a', 110a''), le deuxième dispositif de communication (110b', 110b'') étant configuré pour :
- déterminer, en réponse à la détermination que les deux dispositifs de communication (110a', 110a", 110b', 110b") ont été connectés électroniquement l'un à l'autre, que les deux dispositifs de communication (110a', 110a", 110b', 110b") sont capables de partager au moins une ressource physique disponible entre eux ;
- échanger, en réponse à la notification qu'il existe un besoin de partager des ressources disponibles entre les dispositifs de communication (110a', 110a", 110b', 110b''), des données spécifiques au dispositif pertinentes pour l'au moins un partage nécessaire de ressources entre les deux dispositifs de communication (110a', 110a'', 110b', 110b''), et
- partager l'au moins une ressource physique entre les dispositifs de communication (110a', 110a", 110b', 110b").

13. Deuxième dispositif de communication (110b', 110b'') selon la revendication 12, configuré en outre pour terminer le partage de l'au moins une ressource physique lors de la détermination de l'un de :
- que lesdits dispositifs de communication (110a', 110a'', 110b', 110b") ne sont plus connectés électroniquement, et
- que lesdits dispositifs de communication (110a', 110a'', 110b', 110b") ne sont plus connectés physiquement.

14. Deuxième dispositif de communication (110b', 110b") selon l'une quelconque des revendications 11 à 13, configuré pour répéter les exécutions susmentionnées en réponse à la détermination qu'une tentative de partager l'au moins une ressource entre au moins le premier dispositif de communication (110a', 110a'') et le deuxième dispositif de communication (110b', 110b") a échoué.

15. Deuxième dispositif de communication (110b', 110b") selon l'une quelconque des revendications 11 à 14, configuré pour déterminer que les dispositifs de communication (110a', 110a", 110b', 110b") sont capables de partager au moins une ressource sur la base au moins de :
- une disponibilité déterminée de l'au moins une ressource ;
- une disponibilité prédite de l'au moins une ressource ;
- un type de dispositifs de communication pour partager des ressources ;
- le résultat d'une procédure de signalisation de capacité entre les dispositifs de communication (110a', 110a'', 110b', 110b''), et
- le résultat d'une procédure de signalisation de compatibilité entre les dispositifs de communication (110a', 110a", 110b', 110b").

16. Deuxième dispositif de communication (110b', 110b") selon l'une quelconque des revendications 11 à 15, configuré pour échanger des données spécifiques au dispositif comprenant au moins l'une parmi :
- des informations de placement d'antenne ;
- des instructions de désignation de l'un desdits dispositifs de communication comme dispositif maître ;
- des informations sur des ressources de CPU disponibles pour le partage ;
- des informations liées au temps indiquant quand les une ou plusieurs ressources disponibles peuvent être partagées ou sont estimées comme pouvant être partagées ;
- des informations sur la capacité des une ou plusieurs ressources disponibles qui peuvent être partagées ;
- des informations sur un autre échange d'informations qui doit être exécuté avant de pouvoir initier un partage de ressources ;
- des informations sur des réglages de paramètres qui doivent être exécutés avant de pouvoir initier un partage de ressources, et
- des informations sur au moins une procédure liée à la sécurité qui doit être exécutée avant de pouvoir initier un partage de ressources.

17. Deuxième dispositif de communication (110b', 110b") selon l'une quelconque des revendications 11 à 16, configuré pour activer une fonctionnalité comprenant au moins l'une parmi :
- la planification d'utilisation de ressources de l'au moins une ressource à partager entre lesdits dispositifs de communication (110a', 110a", 110b', 110b''), et
- l'adaptation du mode d'au moins une ressource qui dépend de la ressource à partager.
